# EUROPÄISCHE PATENTSCHRIFT

(11) **EP 1 628 864 B1**
(45) Veröffentlichungstag und Bekanntmachung des Hinweises auf die Patenterteilung: **25.03.2015**
(21) Anmeldenummer: 04741529.4
(22) Anmeldetag: 07.05.2004
(51) Int. Cl.: B60T 8/1755, B60W 30/02, B60G 17/015, B62D 6/00

(54) **FAHRDYNAMIKREGELSYSTEM FÜR FAHRZEUGE**
DRIVING DYNAMICS CONTROL SYSTEM FOR VEHICLES
SYSTEME DE REGLAGE DE LA DYNAMIQUE DE TRANSLATION DE VEHICULES AUTOMOBILES

(30) Priorität: 13.05.2003 DE 10321645; 05.09.2003 DE 10341412
(43) Veröffentlichungstag der Anmeldung: 01.03.2006
(73) Patentinhaber: Continental Teves AG & Co. oHG, 60488 Frankfurt am Main (DE)
(72) Erfinder: SCHWARZ, Ralf, 69118 Heidelberg (DE); FRITZ, Stefan, 64390 Erzhausen (DE); SCHRÄBLER, Sighard, 60385 Frankfurt am Main (DE); BAUER, Urs, 65934 Frankfurt am Main (DE); TRÖSTER, Steffen, 76228 Karlsruhe (DE); WEINREUTER, Markus, 64807 Dieburg (DE)
(86) Internationale Anmeldenummer: PCT/EP2004/050735
(87) Internationale Veröffentlichungsnummer: WO 2004/101337

(56) Entgegenhaltungen:
- WO-A-02/100698
- WO-A-03/106235
- DE-A- 10 132 440
- DE-A- 10 143 551
- DE-A- 19 749 005
- DE-A- 19 812 238

## Beschreibung

Die Erfindung betrifft ein Fahrdynamikregelsystem für Fahrzeuge, mit mindestens einer Signalverteilung, der Fahrzeugdaten, Umweltdaten und Daten bzgl. des Fahrerwunsches als Eingangsdaten zugeführt werden und mehreren steuer- bzw. regelbaren Subsystemen, die die Dynamik des Fahrzeugs modifizieren, wie eine fahrerunabhängig verstellbare Lenkung, ein fahrerunabhängig verstellbares Fahrwerk, eine fahrerunabhängig verstellbare Bremse und einen fahrerunabhängig verstellbaren Antriebsstrang.

Sowohl der Komfort als auch die Sicherheitstechnik nehmen in Fahrzeugen immer mehr zu. Dies führt dazu, dass Fahrzeuge mit immer mehr elektronischen und elektromechanischen Komponenten bzw. Subsystemen ausrüstet werden. Jedes Subsystem bedingt sein eigenes Steuergerät um Sensorsignale zu plausibilisieren, aufzubereiten, Stellsignale zu berechnen und seine Aktuatoren einzuregeln. Jedes dieser Subsysteme bzw. Steuergeräte arbeitet aber für sich (Stand-alone) und weiß oft nichts von den anderen.

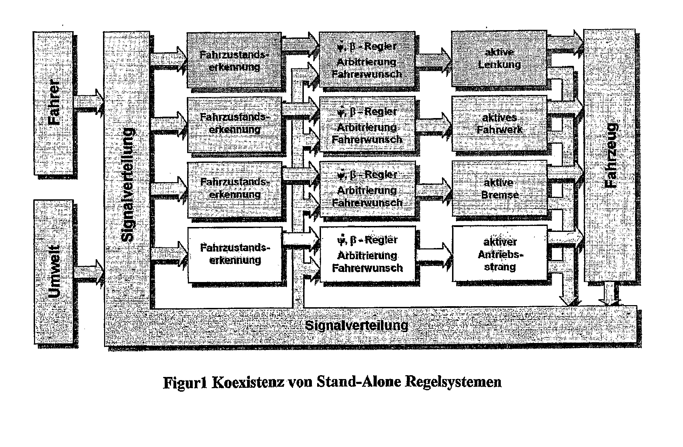

Neben Komfbrtsystemen, wie automatische Scheibenheber, Außenspiegelverstellung etc. nimmt vor allem auch die Zahl an Subsystemen zur Beeinflussung bzw. Verbesserung des Fahrverhaltens bzw. der Fahrdynamik und zur Verbesserung der Sicherheit stark zu. Auch bei den Subsystemen zur Beeinflussung des Fahrverhaltens bzw. der Fahrdynamik ist der Trend zu mehr Elektronik und Elektromechanik zu beobachten. Zu den Subsystemen mit welchen das Fahrverhalten aktiv d.h. unabhängig vom Fahrer, beeinflußt werden kann, zählen das elektronische Bremssystem, das aktive Lenksystem, aktive bzw. semiaktive Fahrwerkskomponenten sowie bei Fahrzeugen mit regelbaren Zwischengetrieben auch das Antriebssystem. Jedes dieser Subsysteme soll das Fahrzeug derart beeinflussen, dass sich Verbesserungen im Fahrverhalten ergeben. Die Schwerpunkte der Regelalgorithmen liegen je nach Subsystem in unterschiedlichen Bereichen (Sicherheit, Handling oder Komfort). Die Subsysteme werden daher primär nur für ihr jeweiliges Regelziel bzw. ihr Haupteinsatzgebiet abgestimmt. Die Einsatzgebiete bzw. die Schwerpunkte der einzelnen Subsysteme überlappen sich jedoch in weiten Bereichen des fahrdynamischen Einsatzbereichs von Fahrzeugen. Jedes dieser Subsysteme arbeitet für sich alleine (Stand-alone), obwohl oft die gleichen fahrdynamischen Größen beeinflußt bzw. eingeregelt werden sollen (Figur 1 am Beispiel der Horizontalregelung). Das führt dazu, dass der Applikationsaufwand, vor allem für die gegenseitige Absicherung der einzelnen Subsysteme gegeneinander, sehr groß ist und resultiert in funktionalen Einschränkungen für jedes Subsystem (d.h. jedes Subsystem kann sein Regelungsziel nicht ideal erreichen, da es die anderen Subsysteme nicht einschränken bzw. behindern darf).

Ein Fahrdynamikregelsystem nach dem Oberbegriff des Anspruchs 1 ist aus der WO 02 100 698 A1 bekannt.

Der Erfindung liegt daher die Aufgabe zugrunde, die Funktionalität einer Fahrdynamikregelung zu erhöhen.

Diese Aufgabe wird durch die Merkmale des Anspruchs 1 gelöst.

Dadurch dass die Daten der Signalverteilung einer zentralen Fahrzustanderkennung zugeführt werden, dass die zentrale Ermittlungseinheit aus den Daten der Signalverteilung ein zentrales, gesamtheitliches Regelziel ermittelt und diese Daten bzgl. des zentralen Regelziels einer zentralen Stellgrößenverteilung zugeführt werden, die in einer interaktiven Kommunikation mit den Subsystemen diese Subsysteme derart ansteuert, dass das Regelziel von den Subsystemen am Fahrzeug umgesetzt wird, reduziert sich der Applikationsaufwand, vor allem für die gegenseitige Absicherung der einzelnen Subsysteme gegeneinander, und die funktionalen Einschränkungen für jedes der Subsysteme entfallen.

Die Aufteilung erfolgt durch den zentralen Fahrzustandsregler bzw. die Stellgrößenverteilung selbst. Der Fahrzustandsregler bzw. die Stellgrößenverteilung ist ein Mehrgrößenregler und die entsprechende Aufteilung der Stellanforderungen auf die einzelnen Subsysteme basiert auf der Reglerauslegung (Reglerkonzept, Regleransatz, Regleralgorithmus) selbst, einem dem Regler vorgegebenen Gütekriterium bzw. Optimierungskriterium und/oder mittels abstimmbarer Gewichtungsfaktoren (Gewichtung entsprechend Stärke und Aktivierungsreihenfolge der Subsysteme). Beispielsweise kann es das Ziel dieser Aufteilung sein, dass bei geringer Instabilitätstendenz die Stabilitsierungsanforderung aus Komfortgründen erst auf das Fahrwerk und die Lenkung verteilt werden. Bei größerer Instabilitätstendenz sind zusätzlich noch die Bremse bzw. der Antriebsstrang zu berücksichtigen. Aus dieser Zielvorgabe lassen sich je nach Regleransatz ein Gütekriterium oder auch entsprechende Gewichtungsfaktoren für den Reglerentwurf bzw. den Regler ableiten.

Vorteilhafte Weiterbildungen der Erfindung sind in den Unteransprüchen angegeben.

### Vorteile der Erfindung

Das Zusammenfassen aller Regelfunktionen der einzelnen Aktuatoren in einem zentralen Fahrdynamikregelalgorithmus (integrierter Ansatz) hat gegenüber der Stand-Alone Variante diverse Vorteile sowohl fahrdynamisch als auch topologisch bzw. systemtechnisch:
- Die verschiedenen Subsysteme bzw. intelligente Aktuatoren werden beim integrierten Ansatz von einem in sich geschlossenen Regelalgorithmus angesteuert. Somit ist das harmonische Zusammenspiel der einzelnen intelligenten Aktuatoren strukturell gesichert. Die Regelung des Fahrzustands ist gesichert, da sich die einzelnen intelligenten Aktuatoren entsprechend dem Mehrgrößenregleransatz nicht gegenseitig negativ beeinflussen können.
- Die Möglichkeit zur Erweiterung des zentralen Fahrdynamikreglers um neue intelligente Aktuatoren ist einfach, da der Komplexitätszuwachs bescheiden ist.
- Die gegenseitige Berücksichtigung der intelligenten Aktuatoren im Regelansatz resultiert in geringerem Applikationsaufwand (bei den Stand-alone Subsystemen müssen diese durch Fahrversuche gegeneinander abgesichert werden). Bei Erweiterungen des Stand-Alone Subsystemnetzes steigt die Komplexität ernorm an, was sich vor allem in einem stark zunehmenden Applikationsaufwand äußert.
- Die zentrale Vernetzung der einzelnen intelligenten Aktuatoren im Regelansatz resultiert in einer geringen Buslast und wenigen physikalischen Schnittstellen zwischen dem Zentralrechner und den intelligenten Aktuatoren. Würden die Stand-Alone Subsysteme "vernetzt", so würde dies zu einem nur schwer kontrollierbaren und pflegbaren Kommunikationsaufkommen zwischen den Stand-Alone Subsystemen führen.
- Die Verlagerung und Zusammenfassung bzw. Integration aller Regelfunktionen, Fahrzustandserkennungen und Fahrerinterpretationen von den Subsystemen in ein zentrales Steuergerät führt zu Kosteneinsparungen. Die einzelnen intelligenten Aktuatoren benötigen für das Ausführen ihrer Grundfunktionen (Steuerungen) weniger Rechenleistung. Somit können bei den intelligenten Aktuatoren günstigere und leistungsärmere Recheneinheiten mit weniger physikalischem Speicherbedarf zum Einsatz kommen.
- Der Aufwand für die Erweiterung und Pflege der gesamten im Fahrzeug vorhandenen Software reduziert sich, da nicht mehr wie bei den Stand-alone Subsystemen für jedes Subsystem eigene Regelalgorithmen, eine Fahrzustandserfassung und Fahrerwunscherkennung nötig sind. Die Regelalgorithmen, die Fahrzustandserfassung und die Fahrerwunscherkennung sind beim integrierten Ansatz nur einmal zentral zu erweitern und pflegen.
- Klare und eindeutige Trennung von Grundfunktionen (Steuerungen) und fahrdynamischen Regelfunktionen (Einregeln von Fahrzustandsgrößen mittels Rückführung von fahrdynamisch relevanten Größen wie beispielsweise der Gierrate, Querbeschleunigung, Schwimmwinkel, etc.).

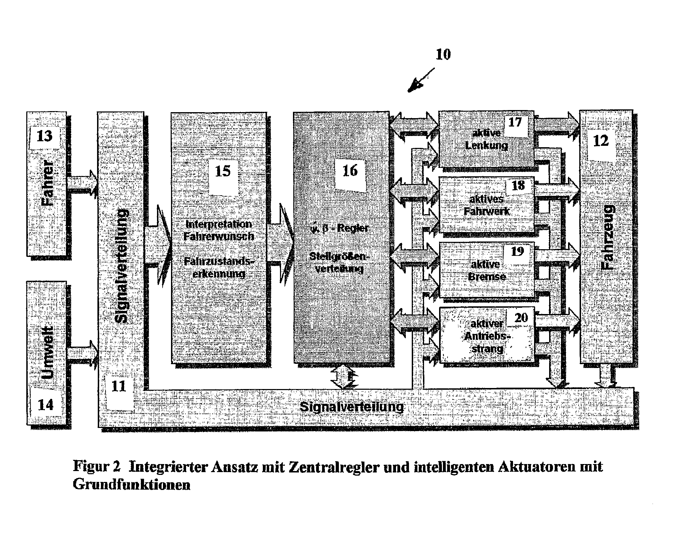

Das optimale Zusammenspiel der einzelnen Subsysteme resultiert in einem optimalen Regelverhalten bzw. einem optimalen Erreichen der Regelziele bei ganzfahrzeugseitiger Betrachtung. Um ein optimales Zusammenspiel der einzelnen Subsysteme zu gewährleisten, werden alle übergeordneten Regelfunktionen der einzelnen Subsysteme zentral in einem Regelalgorithmus zusammengefaßt (integriert). D.h. daß alle Funktionen die das Fahrzeug durch Rückführungen, also Regelung von Fahrzustandsgrößen, beeinflussen zentral in einem Regelalgorithmus zusammengefaßt werden. Am Beispiel der Horizontalregelung bedeutet das nach Figur 2, daß die einzelnen Subsysteme (Bremssystem, Lenksystem, Fahrwerkssystem und Antriebsystem) zu intelligenten Aktuatoren werden. Die Regelung des fahrdynamischen Zustands erfolgt aus einem zentralen übergeordneten Regelalgorithmus, der die einzelnen intelligenten Aktuatoren gezielt anspricht um seine Regelungsziele zu erreichen. Ein intelligenter Aktuator regelt nicht nur Sollwerte des übergeordneten Fahrdynamikreglers ein, sondern meldet dem übergeordneten Fahrdynamikregler auch seinen aktuellen Zustand, sowie sein noch mögliches Stellpotential zurück, so daß dies der übergeordnete Fahrdynamikregler in seiner Regelstrategie berücksichtigen kann. Jeder intelligente Aktuator hat darüber hinaus Grundfunktionen: Diese Grundfunktionen sind ihrerseits reine Steuerungen, d.h. sie agieren ohne Rückführung/Rückkopplung von fahrdynamischen Größen. Beispielsweise ist dies beim Bremssystem die elektronische Bremskraftverteilung, bei einem aktiven Lenksystem eine geschwindigkeitsabhängige Veränderung der Lenkübersetzung oder bei einem Fahrwerkssystem mit aktiven Stabilisatoren die Wankmomentenverteilung gesteuert von der Querbeschleunigung. Alle Regelfunktionen bzw. Rückführungen und Einregelungen von fahrdynamischen Größen laufen im zentralen Fahrdynamikregelalgorithmus. Auch die Bestimmung des aktuellen Fahrzustands und die Bestimmung des Fahrerwunsches erfolgen zentral in einem, dem übergeordneten Fahrdynamikregler vorgeschalteten, Block (Figur 2).

Bild 2 zeigt eine erfindungsgemäße Fahrdynamikregelung 10, die eine Signalverteilung 11 aufweist. Die Signalverteilung erhält Eingangsdaten von dem Fahrzeug 12 (Messgrößen wie z.B. der Querbeschleunigung, der Gierwinkelgeschwindigkeit,), dem Fahrer 13 (Fahrerrichtungswunsch per Lenkwinkel und/oder Gaspedal-, Bremspedalstellung) und der Umwelt 14 ( sofern messbar z.B. der Fahrbahnneigungswinkel, Fahrbahnreibwert, usw.). Die Signalverteilung 11 ist mit einer Ermittlungseinheit 15(Fahrzustandserkennung, Fahrerwunscherkennung) und der Stellgrößenverteilung bzw. der Ermittlungseinheit des zentralen Fahrzustandsreglers 16 und den Subsystemen 17 bis 20 verbunden. Der Ermittlungseinheit 15 werden Eingangsdaten der Systeme Fahrer, Fahrzeug und Umwelt zur Verfügung gestellt und die Ermittlungseinheit 15 bestimmt aus diesem Signal das vom Fahrer gewünschte Sollverhalten des Fahrzeugs sowie nicht messbare Zustands- und Umgebungsgrößen (z.B. Fahrbahnreibwert) und stellt diese Größen dem zentralen Fahrzustandsregler in Block 16 zur Verfügung. Die Stellgrößenverteilung bzw. der zentrale Fahrzustandsregler 16 kommuniziert interaktiv mit der Signalverteilung 11 und stellt dieser auch Daten über die Stellgrößen zur Verfügung. Diese können der Ermittlungseinheit 15 rückgekoppelt werden. Die Stellgrößenverteilung bzw. der zentrale Fahrzustandsregler ist mit jedem der Subsysteme interaktiv verbunden und erteilt auf diesem Weg seine Stellkommandos an die einzelnen Fahrwerksubsysteme, erhält aber auf diese Weise auch Informationen über deren Zustand(z.B. funktionsfähig, teilweise funktionsfähig, nicht funktionsfähig) und über deren aktuelles Stellpotential und berücksichtigt diese Informationen der z.B. Fahrwerksubsysteme in seinen Stellanforderungen. Die Subsysteme 17-20 regeln diese Stellkommandos des zentralen Fahrzustandsreglers ein und stellen ihrerseits der Signalverteilung 11 die von ihnen eingeregelten Ist-Werte bzw. den Ist-Zustand des jeweiligen Subsystems zur Verfügung, welche diese Informationen im geschlossenen Regelkreis wiederum der Ermittlungseinheit 15 (Fahrzustandserkennung und Signalaufbereitung) zur Verfügung stellt.

## Patentansprüche

1. Fahrdynamikregelsystem (10) für Fahrzeuge, mit mindestens einer Signalverteilung (11), der Fahrzeugdaten und Daten bzgl. des Fahrerwunsches als Eingangsdaten zugeführt werden und mehreren steuer- bzw. regelbaren Subsystemen (17-20), die die Dynamik des Fahrzeugs modifizieren, wie eine fahrerunabhängig verstellbare Lenkung, ein fahrerunabhängig verstellbares Fahrwerk, eine fahrerunabhängig verstellbare Bremse und einen fahrerunabhängig verstellbaren Antriebsstrang die Daten der Signalverteilung einer zentralen Ermittlungseinheit (15) zur Fahrzustanderkennung bzw. Fahrerwunscherkennung zugeführt werden, wobei die zentrale Ermittlungseinheit aus den Daten der Signalverteilung ein zentrales Regelziel ermittelt und diese Daten bzgl. des zentralen Regelziels einer zentralen Stellgrößenverteilung bzw. einem zentralen Fahrzustandsregler (16) zugeführt werden, der in einer interaktiven Kommunikation mit den Subsystemen diese Subsysteme derart ansteuert, dass das Regelziel von den Subsystemen am Fahrzeug (12) umgesetzt wird, wobei die Aufteilung des Regelziels auf die Subsysteme in Abhängigkeit von deren möglichen Beitrag zu dem aktuellen Regelziel erfolgt, und wobei der Signalverteilung zusätzlich Umweltdaten (14) zugeführt werden und die Aufteilung des Regelziels auf die Subsysteme weiterhin in Abhängigkeit von deren aktuellen Zustand und deren aktuellen Stellpotential erfolgt, wobei der aktuelle Zustand und das aktuelle Stellpotential von den Subsystemen an die Stellgrößenverteilung (16) zurückgemeldet wird, **dadurch gekennzeichnet, dass** die Subsysteme (17-20) der Signalverteilung die von ihnen eingeregelten Ist-Werte bzw. den Ist-Zustand des jeweiligen Subsystems zuführen, und die Signalverteilung (11) diese Informationen wiederum der zentralen Ermittlungseinheit (15) zur Verfügung stellt.

2. Fahrdynamikregelsystem nach Anspruch 1, **dadurch gekennzeichnet, dass** die Aufteilung des Regelziels auf die Subsysteme weiterhin in Abhängigkeit von dem aktuellen Fahrzustand des Fahrzeugs erfolgt.

3. Fahrdynamikregelsystem nach einem der Ansprüche 1 bis 2, **dadurch gekennzeichnet, dass** das zentrale Regelziel in der zentralen Fahrzustandserkennung (15) ermittelt und vom zentralen Fahrzustandsregler (psip-, beta-Regler) bzw. von der Stellgrößenverteilung (16) auf die Subsysteme aufgeteilt wird.

4. Fahrdynamikregelsystem nach einem der Ansprüche 1 bis 3, **dadurch gekennzeichnet, dass** die Aufteilung des zentralen Regelziels auf die Subsysteme nach Maßgabe eines dem zentralen Fahrzustandsregler bzw. der Stellgrößenverteilung vorgegebenen Reglerkonzeptes bzw. Regleralgorithmus erfolgt, einem dem Fahrzustandsregler bzw. der Stellgrößenverteilung (16) vorgegebenen Gütekriterium bzw. Optimierungskriterium oder mittels abstimmbarer Gewichtungsfaktoren.

5. Fahrdynamikregelsystem nach Anspruch 4, **dadurch gekennzeichnet, dass** eine Gewichtung entsprechend Stärke und Aktivierungsreihenfolge der Subsysteme erfolgt.

## Claims

1. Driving dynamics control system (10) for vehicles, having at least one signal distribution means (11) to which vehicle data and data relating to the driver's request is input as input data, and a plurality of open-loop or closed-loop control subsystems (17-20) which modify the dynamics of the vehicle, such as steering which can be adjusted independently of the driver, a chassis which can be adjusted independently of the driver, a brake which can be adjusted independently of the driver and a drive train which can be adjusted independently of the driver, and the data of the signal distribution means is fed to a central determining unit (15) for detecting the driving status and/or detecting the driver's request,
wherein the central determining unit determines a central control objective from the data of the signal distribution means, and this data relating to the central control objective is fed to a central manipulated variable distribution means or a central driving status controller (16) which, in an interactive communication with the subsystems, actuates these subsystems in such a way that the control objective is implemented by the subsystems on the vehicle (12), wherein the apportioning of the control objective among the subsystems is carried out as a function of their possible contribution to the current control objective, and wherein environmental data (14) is additionally fed to the signal distribution means, and the apportioning of the control objective among the subsystems is also carried out as a function of their current status and their current actuating potential, wherein the current status and the current actuating potential are signalled back from the subsystems to the manipulated variable distribution means (16),
**characterized**
in that the subsystems (17-20) feed to the signal distribution means the actual values applied by said subsystems (17-20) and/or the actual state of the respective subsystem,
and the signal distribution means (11) make this information available in turn to the central determining unit (15).

2. Driving dynamics control system according to Claim 1, **characterized**
in that the apportioning of the control objective among the subsystems is also carried out as a function of the current driving status of the vehicle.

3. Driving dynamics control system according to one of Claims 1 and 2, **characterized**
in that the central control objective is determined in the central driving status detection means (15) and is apportioned among the subsystems by the central driving status controller (psip, beta controller) or by the manipulated variable distribution means (16).

4. Driving dynamics control system according to one of Claims 1 to 3, **characterized**
in that the apportioning of the central control objective among the subsystems is carried out in accordance with a controller concept or controller algorithm which is predefined to the central driving status controller or the manipulated variable distribution means, or in accordance with a quality criterion or optimization criterion predefined to the driving status controller or the manipulated variable distribution means (16), or by means of adjustable weighting factors.

5. Driving dynamics control system according to Claim 4, **characterized**
in that weighting is carried out in accordance with the strength and activation sequence of the subsystems.

## Revendications

1. Système de régulation dynamique de la conduite (10) pour véhicules automobiles, comprenant au moins un distributeur de signaux (11) auquel sont acheminées des données du véhicule et des données concernant un souhait du conducteur en tant que données d'entrée, et plusieurs sous-systèmes commandables ou régulables (17-20) qui modifient la dynamique du véhicule, telle qu'une direction réglable indépendamment du conducteur, un groupe propulseur réglable indépendamment du conducteur, un frein réglable indépendamment du conducteur et une chaîne cinématique réglable indépendamment du conducteur, les données du distributeur de signaux (11) sont acheminées à une unité de détermination centrale (15) destinée à identifier l'état de la conduite ou l'état du souhait du conducteur, l'unité de détermination centrale déterminant à partir des données du distributeur de signaux un objectif de régulation central et ces données concernant l'objectif de régulation central étant acheminées à un distributeur de grandeur de commande central ou régulateur d'état de conduite central (16) qui, dans une communication interactive avec les sous-systèmes, commande ces sous-systèmes de telle sorte que l'objectif de régulation est transposé par les sous-systèmes sur le véhicule (12), la répartition de l'objectif de régulation sur les sous-systèmes s'effectuant en fonction de leur contribution possible à l'objectif de régulation actuel, et des données environnementales (14) supplémentaires étant acheminées au distributeur de signaux et la répartition de l'objectif de régulation sur les sous-systèmes s'effectuant en outre en fonction de leur état actuel et de leur potentiel de commande actuel, l'état actuel et le potentiel de commande actuel étant signalés par retour par les sous-systèmes au distributeur de grandeur de commande (16), **caractérisé en ce que** les sous-systèmes (17-20) acheminent au distributeur de signaux les valeurs réelles régulées par eux ou l'état réel du sous-système correspondant, et le distributeur de signaux (11) met à son tour ces informations à disposition à l'unité de détermination centrale (15).

2. Système de régulation dynamique de la conduite selon la revendication 1, **caractérisé en ce que** la répartition de l'objectif de régulation sur les sous-systèmes s'effectue en outre en fonction de l'état de conduite actuel du véhicule.

3. Système de régulation dynamique de la conduite selon l'une des revendications 1 à 2, **caractérisé en ce que** l'objectif de régulation central est déterminé dans l'unité de détermination centrale de l'état de conduite (15) et réparti sur les sous-systèmes par le régulateur d'état de conduite central (régulateur psip, béta) ou par le distributeur de grandeur de commande (16).

4. Système de régulation dynamique de la conduite selon l'une des revendications 1 à 3, **caractérisé en ce que** la répartition de l'objectif de régulation central sur les sous-systèmes s'effectue d'après les indications d'un concept de régulation ou d'un algorithme de régulation prédéfini pour le régulateur d'état de conduite central ou le distributeur de grandeur de commande, un critère de qualité ou un critère d'optimisation prédéfini pour le régulateur d'état de conduite central ou le distributeur de grandeur de commande (16) ou au moyen de facteurs de pondération pouvant être accordés.

5. Système de régulation dynamique de la conduite selon la revendication 4, **caractérisé en ce qu'**une pondération est réalisée conformément aux forces et à l'ordre d'activation des sous-systèmes.
